# EUROPEAN PATENT SPECIFICATION

(11) **EP 1 491 566 B1**
(45) Date of publication and mention of the grant of the patent: **28.02.2007**
(21) Application number: 03076850.1
(22) Date of filing: 16.06.2003
(51) Int. Cl.: C08G 59/42, C08G 59/50, C08G 59/68, C08L 71/02

(54) **Curable epoxy resin composition, and process for the production of shaped articles therefrom**
Epoxyharzzusammensetzungen und Verfahren zur Herstellung von geformten Gegenständen daraus
Composition de résine de époxy et procédé de moulage d'un article moulé et article moulé par ce procédé

(43) Date of publication of application: 29.12.2004
(73) Proprietor: ABB Technology Ltd, 8050 Zürich (CH)
(72) Inventor: Rocks, Jens, 8057 Zürich (CH); Meier, Patrick, 5600 Lenzburg (CH); Leskosek, Helmut, 40789 Monheim-Baumberg (DE); Claus, Oliver, 40885 Ratingen (DE); Kaltenborn, Uwe, 5405 Baden (CH)
(74) Representative: Zanoli, Enrico

(56) References cited:
- WO-A-00/55254
- WO-A-98/37134
- US-A- 4 578 452
- US-A- 4 925 886
- US-B1- 6 194 490
- DATABASE WPI Section Ch, Week 198815 Derwent Publications Ltd., London, GB; Class A60, AN 1988-101685 XP002263260 & JP 63 051373 A (SHIKOKU CHEM IND CO LTD) , 4 March 1988 (1988-03-04)

## Description

The present invention relates to a curable epoxy resin composition, a process for the fabrication of shaped articles using such composition and shaped articles thus obtained.

Epoxy resins include a broad class of polymeric materials having a wide range of physical properties. The large spectrum of properties available with epoxy resins coupled with their formulating and processing versatility have made them particularly useful in electrical and electronic applications, such as insulating materials in the manufacture of transformers, switchgear, circuit breakers in medium and high voltage applications. Compared to other insulating materials, epoxy resins exhibit excellent mechanical and electrical properties, temperature and long-term creep stability, chemical resistance, and are more cost-effective.

Epoxy resins are polyepoxide monomers or polymers containing generally two or more epoxide groups per molecule which are cured by reaction with curing agents to provide crosslinked or thermoset resins compositions with desired properties. Curing agents, also known as hardeners, are agents that may perform different functions, such as react covalently with the functional group(s) of the polyepoxide to propagate the crosslinking of the resin. Catalysts or accelerators are typically used to catalyze such reaction. Epoxy resins compositions typically contain fillers and may contain additives such as diluents, stabilizers and other ingredients. Curing of the epoxy resin is typically carried out at elevated temperatures (above 100 °C) and for an extended time, after the resin composition has been shaped into its final infusible three dimensional structure by a suitable fabrication process.

Suitable fabrication processes include the Automatic Pressure Gelation (APG) Process and the Vacuum Casting Process. In the latter a solventless, liquid epoxy resin composition is poured into a mold and cured to a solid shaped article at elevated temperature and for a time of up to 10 hours. Afterwards the demolded part is usually postcured at elevated temperatures to complete the curing reaction and obtain a resin with the ultimate desired properties. Such a post-curing step may take, depending on the shape and size of the article, up to 30 hours.

The need for such an extended post-curing step represents a significant drawback in the production of such articles. Moreover, there is generally a need to improve the physical and mechanical properties of epoxy resins, particularly for electrical applications.

Many epoxy resin compositions and fabrication processes using the same are known from the prior art.

EP-A-0 604 089 discloses curable epoxy resin compositions including Bisphenol A, a saturated cycloaliphatic anhydride hardener, a polycarboxylic acid preferably derived from a polyol by in-situ reaction with the anhydride, a silica filler and quaternary ammonium or phosphonium salts as accelerators, for use in the APG Process. A post-curing step of the demolded casting for 2 hours at 135°C in an air-circulatory oven appears to be required (page 6, line 9).

US 4,931,528 discloses a curable epoxy resin consisting of diglycidyl ethers of Bisphenol A (DGEBA), without hardeners or other components, cured by certain substituted imidazoles at elevated temperatures such as 100-160 °C. 1-isopropyl-2-methyl imidazole is preferred over 1-methyl imidazole and 2-ethyl-4-methyl imidazole. However, extended cure times (4-10 hours) at an elevated temperature (150 °C) are required to develop optimum physical properties (column 6, lines 1-2).

US-A-4 587 452 discloses methods for the manufacture of leakage current-proof epoxy resins. The disclosed epoxy resin composition comprises polypropylene glycol and does not disclose the use of bisphenol A or polyethyleneglycol. Also, they have a relatively long post-curing time.

US-B1-6 194 490 discloses curable epoxy resin compositions comprising polypropylene glycol. The epoxy resin compositions of the cited document do not disclose the use of bisphenol A or polyethyleneglycol and have a relatively long post-curing time.

WO 00/55254 A discloses a hardenable epoxy resin composition comprising the use of polypropylene glycol as an ingredient of an accelerator. The epoxy resin composition of the cited document does not disclose the use of bisphenol A or polyethyleneglycol and has a relatively long post-curing time.

US-A-4 925 886 discloses a high temperature epoxy resin composition that does not include the use of a glycol as flexibilizer of the composition in the curing stage.

A first object of the invention is to provide curable epoxy resin compositions that generate cured resins with improved physical and mechanical properties.

A second object of the present invention is to provide a fabrication process capable of producing shaped thermoset articles made of cured resins with optimum or entirely satisfactory properties developed within relatively short times.

Another object of the present invention is to provide shaped thermoset articles, particularly for electrical applications, which possess suitable properties and are cost-effective.

These and other objects of the inventions are met by the curable epoxy resin composition, the fabrication process and the shaped articles set forth in the appended claims.

The curable epoxy resin composition according to the invention comprises:
- a polyepoxide;
- an anhydride hardener;
- a 1-substituted imidazole as catalyst;
- at least a diol selected from the group consisting of bisphenol A and polyethylene glycol with a molecular weight Mw < 1000
- a filler;
- optionally additives or other ingredients.

Suitable polyepoxide are vicinal polyepoxy compounds with an average of at least 1.8 reactive 1,2-epoxy groups per molecule. They can be monomeric (degree of polymerization n=0) or polymeric (n>0, up to n=40 or more for high MW resins), saturated or unsaturated, aliphatic, cycloaliphatic, aromatic or heterocyclic, and may be substituted, if desired, with other substituents besides the epoxy groups, e.g. hydroxyl groups, ether groups, aromatic halogen atoms. Typically these materials have an epoxy equivalent weight of 100 to 250. Preferred polyepoxides are glycidyl ethers prepared by epoxidizing the corresponding allyl ethers or reacting, by known procedures, a molar excess of epihaloidrin such as epichloridrin with either a polyhydric phenol or a polyhydric alcohol.

An illustrative but not limiting list of dihydric phenols that can be reacted with an epihaloidrin include: 4,4'isopropylidene bisphenol; 2,4'-dihydroxydiphenylethylmethane; 3,3'-dihydroxydiphenyldiethylmethane; 3,4'-dihydroxydiphenylmethylpropylmethane; 2,3'-dihydroxydiphenylethylphenylmethane; 4,4'-dihydroxydiphenylpropylphenylmethane; 4,4'-dihydroxydiphenylbutylphenylmethane; 2,2'-dihydroxydiphenylditolylmethane; 4,4'-dihydroxydiphenyltolylmethylmethane. Other polyhydric phenols which may be reacted with an epihaloidrin to provide suitable polyepoxides include resorcinol, hydroquinone and substituted hydroquinones.

An illustrative but not limiting list of polyhydric alcohols that can be reacted with an epihaloidrin include: ethylene glycol; propylene glycols; butilene glycols; pentane diols; bis-(4-hydroxycyclohexyl)dimethylmethane; 1,4-dimethylolbenzene; glycerol; 1,2,6-hexanetriol; trimethylolpropane; mannitol; sorbitol; erythritol; pentaerythritol; their dimers, trimers and higher polymers; e.g. polyethylene glycols, polypropylene glycols; triglycerol; dipentaerythritol; polyallylalcohols; polyhydric thioethers such as 2,2'-3,3'-tetrahydroxydipropylsulfide; mercaptoalcohols such as monothioglycerol and dithioglycerol; polyhydric alcohols partial esters such as monostearin and pentaerythritol monoacetate; halogenated polyhydric alcohols such as monochlorohydrins of glycerol, sorbitol and pentaerythritol.

Preferred polyepoxides are those obtained by reacting epichloridrin with bisphenol A, such as the diglycidyl ether of bisphenol A (DGEBA).

Suitable anhydride hardeners as curing agents include, but are not limited to: maleic anhydride; methyltetrahydrophtalic anhydride; methyl-4-endomethylene tetrahydrophtalic anhydride; hexahydrophtalic anhydride; tetrahydrophtalic anhydride; dodecenyl succinic anhydride. A preferred anhydride is methyltetrahydrophtalic anhydride.

The stoichiometry of anydride hardeners may vary from a molar defect to a molar excess of the anhydride with respect to the polyepoxide, as it is known to those skilled in the art. When used to cure DGEBA, methyltetrahydrophtalic anhydride is typically present in an amount of from 40 to 70 parts per hundred (phr) of the DGEBA, preferably from 50 to 65 phr.

Suitable 1-substituted imidazole catalysts for the curing step are 1-alkyl imidazoles which may or may not be substituted also in position 2, such as 1-methyl imidazole or 1-isopropyl-2-methyl imidazole. According to one aspect of the present invention, it has been found that when such substituted imidazoles are used as catalysts for the curing step, the ultimate desired properties for the cured resins can be achieved in a relatively short time, without the need for an extended post-curing step. For DGEBA resins cured with anhydrides, a substituted imidazole catalyst is needed in amounts of no more than 5 phr of the DGEBA, preferably less than 2.5, more preferably less than 1 phr.

According to another aspect of the present invention, at least one diol is used as flexibilizer in the curable epoxy resin composition.

Suitable diols include aromatic diols such as bisphenol A and aliphatic monomeric or polymeric diols such as polyethylene glycols (PEG) or polypropylene glycols (PPG). According to another aspect of the invention, the presence of either an aromatic flexibilizer, e.g. bisphenol A, or an aliphatic flexibilizer, e.g. PEG, improves certain physical and mechanical properties of the cured resin, a synergistic effect been apparent when both the aromatic and aliphatic flexibilizers are present. According to the invention, the polyol is used in an amount of from 5 to 50 phr of the DGEBA, preferably from 10 to 40 phr. When both the aromatic and aliphatic diol are used, their weight ratio may vary from 80:20 to 20:80.

A wide range of fillers may be used, both fine and coarse particles. The filler may be inorganic such as china clay, calcined china clay, quartz flour, silica, cristobalite, chalk, mica powder, glass powder, glass beads, powdered glass fibre, aluminium oxide, wollastonite and magnesium hydroxide; or organic such as powdered PVC, polyamides, polyethylene, polyester or cured epoxy resins. Flame retardant fillers such as trihydrated alumina may also be used. In general, fillers with a particle size of from 0.1 to 3,000 µm may be used, preferably from 5 to 500 µm.

Filler loading in the composition can vary within a broad range, depending on the final application of the resin. High loading of inorganic fillers may improve certain properties such as abrasion resistance or electrical properties, usually at the expense of mechanical properties such as tensile and flexural strength. A right balance has to be found depending on the application. For electrical applications loading can be of from 200 to 600 parts per hundred (phr) of the polyepoxide, preferably of from 250 to 400 phr of the polyepoxide, more preferably from 300 to 400 phr.

The curable epoxy resin composition of the invention may contain other additives conventionally employed in molding resin compositions, such as pigments, dyes, stabilizers.

Suitable fabrication processes for cured epoxy resin compositions of the invention are the APG Process and the Vacuum Casting Process. As mentioned above, such processes typically include a curing step in the mold for a time sufficient to shape the epoxy resin composition into its final infusible three dimensional structure, typically up to 10 hours, and an extended post-curing step of the demolded article at elevated temperature to develop the ultimate physical and mechanical properties of the cured epoxy resin composition. Such a post-curing step may take, depending on the shape and size of the article, up to 30 hours. Taking the Glass Transition Temperature (Tg) as an indicator of the desired ultimate properties of the cured resin, it is possible to define a relationship between the ultimate (Tgu) that would be developed by the resin if it were post-cured for an extended time of 10 hours, and a satisfactory Tg (Tgs) that is developed by the resin after 30 minutes of curing, directly after gelation, at a given temperature. This comparison allows to define a right balance between desired properties of the cured epoxy resin composition and acceptable duration (time) of the post-curing step to maximize the economics of the fabrication process.

The improved fabrication process according to the invention comprises the steps of: a) preheating a curable liquid epoxy resin composition comprising a polyepoxide, an anhydride hardener, a 1-substituted imidazole catalyst, a filler and, b) transferring such composition into a pre-heated mold; c) curing said composition at elevated temperature for a time sufficient to obtain a shaped article with an infusible three dimensional structure and a satisfactory Tg (Tgs) which fulfils the relation 0.90·Tgu ≤Tgs ≤Tgu, preferably 0.94·Tgu ≤Tgs ≤Tgu, where Tgu is the Tg developed by the cured epoxy resin composition after a post curing step of 10 hours at 140 °C.

The anhydride hardener is present in amount of from 40 to 125 phr of the polyepoxide, preferably from 50 to 90 phr of the polyepoxide.

In a preferred improved fabrication process according to the invention the curable epoxy resin composition of step a) contain also one or more diols as flexibilizer.

In the examples below the invention is illustrated with reference to a Vacuum Casting Process, but they are not to be construed as to limiting the scope thereof in any manner.

### EXAMPLES

In the examples:
- Glass Transition Temperature, Tg (°C) was measured by the procedure according to ISO 11357-2.
- Tensile Strength was measured by the procedure according to ISO 527.
- Flexural properties were determined by the 3 points Bending Test to according ISO 178.
- Fracture Toughness was measured by the procedure according to the Double-Torsion Test (Ciba-Standard; CG No.216-0/89), where K_{1c} designates the critical stress intensity factor and G_{1c} designates the critical energy release rate.

Four curable epoxy resin compositions according to the invention (examples 1 to 4) and one comparison composition according to the prior art (comparison example) were prepared as set forth in Table 1 below. The components of the composition are expressed in parts per hundred (phr).

**Table 1**

| **Components** | **Comparison ex.** | **comparative Ex.1** | **Ex.2** | **Ex.3** | **Ex. 4** |
|---|---|---|---|---|---|
| Diglycidylether of bisphenol A (DGEBA) MW<700 (polyepoxide) | 100 | 100 | 100 | 100 | 100 |
| Methyltetrahydrophtalic anhydride (hardener) | 85 | 85 | 57 | 57 | 57 |
| Benzyldimethylamine (catalyst) | 1.2 | | | | |
| 1-methylimidazole (catalyst) | | 0.75 | 0.75 | 0.75 | 0.75 |
| Bisphenol A (flexibilizer) | | | 14.2 | | 14.2 |
| Polyethylene glycol MW<400 (flexibilizer) | | | | 14.2 | 20 |
| Silica W12 (Quarzwerke Frechen, Germany) (filler) | 336 | 336 | 322 | 322 | 322 |

The components of each of the compositions of the 5 examples above were pre-heated to 60°C before being mixed under vacuum (P<10 mbar) for 15 minutes. Each of the 5 compositions was then cast into steel molds pre-heated at 140°C according to a Vacuum Casting Process and cured for 30 minutes.

In a first experiment the shaped articles were directly demolded and cooled down to room temperature under standard conditions. Samples were the taken and tested to determine whether the property profile was satisfactory without any post-curing. The properties at this time a of 30 minutes are reported in Table 2.

In a second experiment the shaped articles after demolding were post-cured at a temperature of 140°C in an air circulating oven for up to 10 hours, then the same set of properties was measured to determine the extent of improvement of such properties, namely to determine the ultimate properties. Such ultimate properties at the post-curing time b of 10 hours are also reported in Table 2.

The results are shown in Table 2.

**Table 2**

| | | **Comparison Ex. Property @ time** | | **comparative Example 1 Property @ time** | | **Example 2 Property @ time** | | **Example 3 Property @ time** | | **Example 4 Property @ time** | |
|---|---|---|---|---|---|---|---|---|---|---|---|
| | | **a) 30'** | **b) 10h** | **a) 30'** | **b) 10h** | **a) 30'** | **b) 10h** | **a) 30'** | **b) 10h** | **a) 30'** | **b) 10h** |
| **Tg (°C)** | | 103.2 | 123.5 | 141.4 | 144.9 | 127.6 | 129.8 | 91.9 | 94.0 | 72.4 | 76.4 |
| **Tensile Test** | **σᵣₘ (MPa)** | 74.4 | 81.8 | 66.2 | 69.2 | 74.9 | 76 | 72.0 | 79.6 | 73.4 | 78.5 |
| | **ε_{rb} (%)** | 0.87 | 0.85 | 0.67 | 0.78 | 0.96 | 0.94 | 0.87 | 0.98 | 1.15 | 1.17 |
| | **Eᵣ (GPa)** | 11.12 | 11.31 | 11.0 | 10.9 | 9.78 | 9.72 | 11.0 | 10.8 | 9.87 | 9.72 |
| **Flexural Properties** | **σ_{fm} (MPa)** | 100.3 | 127.1 | 102.3 | 106.7 | 107.2 | 108.2 | 129.7 | 134.5 | 126.8 | 129.5 |
| | **ε_{fm} (%)** | 0.86 | 1.17 | 1.47 | 1.64 | 1.08 | 1.17 | 1.97 | 2.07 | 1.69 | 1.71 |
| | **E_{f} (GPa)** | 11.3 | 11.86 | 10.9 | 10.4 | 10.8 | 10.33 | 11.0 | 10.78 | 10.02 | 10.72 |
| **Fracture Toughness** | **K_{1c}(MPam^{0.5})** | 2.12 | 2.07 | 1.95 | 1.93 | 2.10 | 2.09 | 2.40 | 2.49 | 2.70 | 2.71 |
| | **G_{1c} (J/m²)** | 380 | 343 | 288 | 294 | 419 | 404 | 450 | 474 | 674 | 686 |

### DISCUSSION OF RESULTS

With the composition of comparative example 1, which differs from the comparison example only for the replacement of a conventional benzyldimethylamine catalyst with a 1-substituted imidazole catalyst, a substantially higher Tg for both short curing time a and extended post-curing time b was obtained. Moreover, with the composition of ex.1 such improved Tg does not vary substantially when article is post-cured for an extended time. Taking the Tg developed after 10 hours of post-curing as the ultimate Tg (Tgu) that can be developed by each composition, it appears that whilst the composition of the comparison example is able to develop in 30' a Tg which is 0.83 Tgu, the composition of example 1 is able to develop in 30' a Tg which is 0.97 Tgu. This means that a satisfactory Tg (Tgs) fulfilling the relation 0.90 Tgu ≤Tgs ≤Tgu is developed in short time, thereby making unnecessary to extend the time of the fabrication process to allow the epoxy resin to develop its ultimate Tg (Tgu).

With the composition of example 2 (where bisphenol A is added as flexibilizer), the Tg is improved over the comparison example and a satisfactory Tg of 0.98 Tgu is developed at short post-curing time. Most of the properties are also improved, even at short post-curing time.

With the composition of example 3 (where PEG was used as flexibilizer instead of bisphenol A), a decrease in Tg was observed, compensated by a significant increase in flexural properties and fracture toughness. Again, a satisfactory Tgs of 0.97 Tgu was developed at short curing time.

With the composition of example 4 (where both bisphenol A and PEG were added), the Tg was significantly decreased with respect to the comparison example, due to high total flexibilizer content, amounting to about 35 phr of the polyepoxide. Nevertheless, a satisfactory Tgs of 0.94 Tgu was developed in a short post-curing time. Other properties of the epoxy resin composition of example 4 were substantially improved over the comparison example, in particular the fracture toughness, with respect to which the combination of an aromatic and aliphatic diol shows a synergistic effect at both short curing and extended post-curing times. With respect to the critical stress intensity factor K_{1c} after a short curing time, the composition of example 4 gives a value of 2.70 MPam^{0.5} which is a synergistic result over the values of 2.10 and 2.40 MPam^{0.5} of example 2 and 3, respectively. With respect to the critical energy release rate G_{1c} after a short curing time, the composition of example 4 gives a value of 674 J/m² which is a synergistic result over the values of 419 and 450 J/m² of example 2 and 3, respectively. The same is true for the corresponding values of such compositions after extended post-curing times.

It appears from the examples above that the compositions of example 2, 3 and 4, where a flexibilizer is present, are particularly performing in terms of crack resistance, the compositions of example 2 and 3 offering also a good balance with the Tg values and the composition of example 4 offering the best performance as to crack resistance.

As to the applicational field of the shaped articles obtained with the compositions and the process of the invention, it appears that the compositions of examples 2 and 3 are particularly suitable for the manufacturing of structural electrical components such as pole housing, tulips for medium and high voltage circuit breakers which may be exposed to high temperatures (hot-spot or long term), or generally to those applications where enhanced temperature resistance is necessary. The composition of example 4 is particularly suitable for the manufacturing of instruments and/or distribution transformers or articles where an increased crack resistance is required.

With respect to the process aspects of the invention, it is apparent that the possibility to develop a satisfactory Tg in a very short curing step, for example of 30 minutes, may render unnecessary to carry out such post-curing step on the demolded article, particularly when the temperature of the post-curing step is the same as that of the curing step carried out within the mold. Curing and post-curing can be consolidated, if desired and convenient, in just one step within the mold, whereby the shaped article is demolded and allowed to cool down to room temperature, resulting in a streamlining of the fabrication process.

## Claims

1. Curable epoxy resin composition comprising:
- a polyepoxide
- an anhydride hardener;
- a 1-substituted imidazole as catalyst;
- at least a diol selected from the group consisting of bisphenol A and polyethyleneglycol with a molecular weight Mw < 1000.
- a filler;
- optionally additives or other ingredients.

2. Curable epoxy resin composition according to claim 1, wherein said polyepoxide is obtained by reacting an epihalohydrin with bisphenol A.

3. Curable epoxy resin composition according to claim 2, wherein said polyepoxide is the diglycidyl ether of bisphenol A (DGEBA).

4. Curable epoxy resin composition according to any of the preceding claims wherein said anhydride hardener is selected in the group consisting of methyltetrahydrophtalic anhydride; methyl-4-endomethylene tetrahydrophtalic anhydride; hexahydrophtalic anhydride; tetrahydrophtalic anhydride.

5. Curable epoxy resin composition according to any of the preceding claims, wherein both bisphenol A and polyethyleneglycol with a molecular weight Mw < 1000 are present in a weight ratio of from 80:20 to 20:80.

6. Curable epoxy resin composition according to claim 5 wherein said diol is present in an amount of from 5 to 50 phr of said polyepoxide.

7. Curable epoxy resin composition according to claim 6 wherein said diol is present in an amount of from 10 to 40 phr of said polyepoxide

8. Curable epoxy resin composition according to claim 1, wherein said 1-substituted imidazole catalyst is 1-methyimidazole.

9. Curable epoxy resin composition according to claim 4, wherein said anhydride is present in amount of from 40 to 70 phr of the DGEBA.

10. Curable epoxy resin composition according to claim 9, wherein said anhydride is present in an amount of from 50 to 65 phr of the DGEBA.

11. Curable epoxy resin composition according to claim 4, wherein said filler is silica.

12. Curable epoxy resin composition according to claim 11, wherein said filler is present in an amount of from 200 to 600 phr of said polyepoxide.

13. Curable epoxy resin composition according to claim 12, wherein said filler is present in an amount of from 250 to 500 phr of said polyepoxide.

14. Curable epoxy resin composition according to claim 13, wherein said filler is present in an amount of from 300 to 400 phr of said polyepoxide

15. Process for the fabrication of thermoset articles comprising the steps of:
a) pre heating a curable epoxy resin composition comprising a polyepoxide, an anhydride hardener, a 1-substituted imidazole catalyst, a filler and at least a diol selected from the group consisting of bisphenol A and polyethylene glycol or a mixture thereof, and optionally additives or other ingredients;
b) transferring such composition into a pre-heated mold;
c) curing said composition at a temperature and for a time sufficient to obtain a shaped article with an infusible three dimensional structure and a satisfactory Tg (Tgs) which fulfils the relation 0.90·Tgu≤ Tgs≤ Tgu, where Tgu is the ultimate Tg developable by the cured epoxy resin composition after a post curing step of 10 hours at a temperature of 140°C.

16. Process for the fabrication of thermoset articles according to claim 15, wherein said polyepoxide of said curable epoxy resin composition is the diglycidyl ether of bisphenol A (DGEBA).

17. Process for the fabrication of thermoset articles according to claim 15, wherein said anhydride hardener is selected in the group consisting of methyltetrahydrophtalic anhydride; methyl-4-endomethylene tetrahydrophtalic anhydride; hexahydrophtalic anhydride; tetrahydrophtalic anhydride.

18. Process for the fabrication of thermoset articles according to claim 17, wherein said anhydride hardener is present in amount of from 40 to 125 phr of the DGEBA.

19. Process for the fabrication of thermoset articles according to claim 18, wherein said anhydride hardener is present in amount of from 50 to 90 phr of the DGEBA

20. Process for the fabrication of thermoset articles according to claim 15, wherein said diol is present in an amount of from 5 to 50 phr of said polyepoxide.

21. Process for the fabrication of thermoset articles according to claim 20, wherein said diol is preferably present in an amount of from 10 to 40 phr of said polyepoxide.

22. Process for the fabrication of thermoset articles according to claim 15, wherein said filler is silica.

23. Process for the fabrication of thermoset articles according to claim 22, wherein said filler is present in an amount of from 200 to 600 phr of said polyepoxide.

24. Process for the fabrication of thermoset articles according to claim 23, wherein said filler is present in an amount of from 250 to 500 phr of said polyepoxide.

25. Process for the fabrication of thermoset articles according to claim 24, wherein said filler is present in an amount of from 300 to 400 phr of said polyepoxide.

26. Process for the fabrication of thermoset articles according to claim 15, wherein said satisfactory Tg (Tgs) fulfils the relation 0.94· Tgu ≤ Tgs ≤ Tgu.

27. Shaped thermoset articles obtainable by the process of any of the claims from 15 to 26.

28. Use of the shaped thermoset articles according to claim 27 for the manufacture of components or parts of electrical equipment.

## Patentansprüche

1. Härtbare Epoxidharz-Zusammensetzung, umfassend:
- ein Polyepoxid;
- einen Anhydrid-Härter;
- ein 1-substituiertes Imidazol als Katalysator;
- wenigstens ein Diol, ausgewählt aus der Gruppe, bestehend aus Bisphenol A und Polyethylenglycol, mit einem Molekulargewicht Mw <1000 ;
- einem Füllstoff;
- optional Additive oder andere Inhaltsstoffe.

2. Härtbare Epoxidharz-Zusammensetzung nach Anspruch 1, worin das Polyepoxid durch Umsetzen eines Epihalohydrins mit Bisphenol A erhalten wurde.

3. Härtbare Epoxidharz-Zusammensetzung nach Anspruch 2, worin das Polyepoxid der Diglycidylether von Bisphenol A (DGEBA) ist.

4. Härtbare Epoxidharz-Zusammensetzung nach einem der vorhergehenden Ansprüche, worin der Anhydrid-Härter ausgewählt ist aus der Gruppe, bestehend aus Methyltetrahydrophthalsäureanhydrid; Methyl-4-endomethylentetrahydrophthalsäureanhydrid; Hexahydrophthalsäureanhydrid; Tetrahydrophthalsäureanhydrid.

5. Härtbare Epoxidharz-Zusammensetzung nach einem der vorhergehenden Ansprüche, worin beide, Bisphenol A und Polyethylenglycol mit einem Molekulargewicht Mw <1000, in einem Gewichtsverhältnis von 80:20 bis 20:80 vorliegen.

6. Härtbare Epoxidharz-Zusammensetzung nach Anspruch 5, worin das Diol in einer Menge von 5 bis 50 PHR des Polyepoxids vorliegt.

7. Härtbare Epoxidharz-Zusammensetzung nach Anspruch 6, worin das Diol in einer Menge von 10 bis 40 PHR des Polyepoxids vorliegt.

8. Härtbare Epoxidharz-Zusammensetzung nach Anspruch 1, worin der 1-substituierte Imidazol-Katalysator 1-Methylimidazol ist.

9. Härtbare Epoxidharz-Zusammensetzung nach Anspruch 4, worin das Anhydrid in einer Menge von 40 bis 70 PHR des DGEBA vorliegt.

10. Härtbare Epoxidharz-Zusammensetzung nach Anspruch 9, worin das Anhydrid in einer Menge von 50 bis 65 PHR des DGEBA vorliegt.

11. Härtbare Epoxidharz-Zusammensetzung nach Anspruch 4, worin der Füllstoff Siliciumdioxid ist.

12. Härtbare Epoxidharz-Zusammensetzung nach Anspruch 11, worin der Füllstoff in einer Menge von 200 bis 600 PHR des Polyepoxids vorliegt.

13. Härtbare Epoxidharz-Zusammensetzung nach Anspruch 12, worin der Füllstoff in einer Menge von 250 bis 500 PHR des Polyepoxids vorliegt.

14. Härtbare Epoxidharz-Zusammensetzung nach Anspruch 13, worin der Füllstoff in einer Menge von 300 bis 400 PHR des Polyepoxids vorliegt.

15. Verfahren zum Herstellen duroplastischer Gegenstände, die Verfahrensschritte umfassend:
a) Vorwärmen einer härtbaren Epoxidharz-Zusammensetzung, die ein Polyepoxid, einen Anhydrid-Härter, ein 1-substituiertes Imidazol als Katalysator, einen Füllstoff und wenigstens ein Diol, ausgewählt aus der Gruppe, bestehend aus Bisphenol A und Polyethylenglycoloder einer Mischung derselben und optional Additive oder andere Inhaltsstoffe umfasst;
b) Überführen einer solchen Zusammensetzung in eine vorgewärmte Form;
c) Härten der Zusammensetzung bei einer Temperatur und für eine Zeit, die zum Erhalt eines Formgegenstands mit einer nicht-schmelzbaren dreidimensionalen Struktur und eines zufriedenstellenden Tg (Tgs) ausreicht, der die Beziehung 0,90xTgu<_Tgs<_Tgu erfüllt, wobei Tgu der endgültige Tg ist, der von einer härtbaren Epoxidharz-Zusammensetzung nach dem Schritt eines Nachhärtens von 10 Stunden bei einer Temperatur von 140°C entwickelt werden kann.

16. Verfahren zum Herstellen duroplastischer Gegenstände nach Anspruch 15, bei dem das Polyepoxid der härtbaren Epoxidharz-Zusammensetzung der Diglycidylether von Bisphenol A (DGEBA) ist.

17. Verfahren zum Herstellen duroplastischer Gegenstände nach Anspruch 15, bei dem der Anhydrid-Härter ausgewählt ist aus der Gruppe, bestehend aus Methyltetrahydrophthalsäureanhydrid; Methyl-4-endomethylentetrahydrophthalsäureanhydrid; Hexahydrophthalsäureanhydrid; Tetrahydrophthalsäureanhydrid.

18. Verfahren zum Herstellen duroplastischer Gegenstände nach Anspruch 17, bei dem der Anhydrid-Härter in einer Menge von 40 bis 125 PHR des DGEBA vorliegt.

19. Verfahren zum Herstellen duroplastischer Gegenstände nach Anspruch 18, bei dem der Anhydrid-Härter in einer Menge von 50 bis 90 PHR des DGEBA vorliegt.

20. Verfahren zum Herstellen duroplastischer Gegenstände nach Anspruch 15, bei dem das Diol in einer Menge von 5 bis 50 PHR des Polyepoxids vorliegt.

21. Verfahren zum Herstellen duroplastischer Gegenstände nach Anspruch 20, bei dem das Diol bevorzugt in einer Menge von 10 bis 40 PHR des Polyepoxids vorliegt.

22. Verfahren zum Herstellen duroplastischer Gegenstände nach Anspruch 15, bei dem der Füllstoff Siliciumdioxid ist.

23. Verfahren zum Herstellen duroplastischer Gegenstände nach Anspruch 22, bei dem der Füllstoff in einer Menge von 200 bis 600 PHR des Polyepoxids vorliegt.

24. Verfahren zum Herstellen duroplastischer Gegenstände nach Anspruch 23, bei dem der Füllstoff in einer Menge von 250 bis 500 PHR des Polyepoxids vorliegt.

25. Verfahren zum Herstellen duroplastischer Gegenstände nach Anspruch 24, bei dem der Füllstoff in einer Menge von 300 bis 400 PHR des Polyepoxids vorliegt.

26. Verfahren zum Herstellen duroplastischer Gegenstände nach Anspruch 15, bei dem der zufrieden stellende Tg (Tgs) die Beziehung 0,94xTgu≤Tgs≤Tgu erfüllt.

27. Duroplastische Formgegenstände, erhältlich durch ein Verfahren nach einem der Ansprüche 15 bis 26.

28. Verwendung der thermoplastischen Formgegenstände nach Anspruch 27 zum Herstellen von Komponenten oder Teilen elektrischer Ausrüstungen.

## Revendications

1. Composition de résine époxy durcissable comprenant:
- un poly(époxyde)
- un durcisseur consistant en un anhydride;
- un catalyseur consistant en un imidazole 1-substitué;
- au moins un diol choisi dans le groupe constitué par le bisphénol A et le poly(éthylène glycol) ayant une masse moléculaire Mw < 1000;
- une charge;
- facultativement des additifs ou d'autres ingrédients.

2. Composition de résine époxy durcissable selon la revendication 1, dans laquelle ledit poly(époxyde) est obtenu par réaction d'une épihalogénohydrine avec du bisphénol A.

3. Composition de résine époxy durcissable selon la revendication 2, dans laquelle ledit poly(époxyde) est le diglycidyl éther de bisphénol A (DGEBA).

4. Composition de résine époxy durcissable selon l'une quelconque des revendications précédentes, dans laquelle ledit durcisseur consistant en un anhydride est choisi dans le groupe comprenant l'anhydride méthyltétrahydrophtalique; l'anhydride méthyl-4-endométhylène tétrahydrophtalique; l'anhydride hexahydro-phtalique; l'anhydride tétrahydrophtalique.

5. Composition de résine époxy durcissable selon l'une quelconque des revendications précédentes, dans laquelle le bisphénol A et le poly(éthylène glycol) ayant une masse moléculaire Mw<1000 sont simultanément présents en un rapport en poids de 80/20 à 20/80.

6. Composition de résine époxy durcissable selon la revendication 5, dans laquelle ledit diol est présent en une quantité formant de 5 à 50 phr dudit poly(époxyde).

7. Composition de résine époxy durcissable selon la revendication 6, dans laquelle ledit diol est présent en une quantité formant de 10 à 40 phr dudit poly(époxyde).

8. Composition de résine époxy durcissable selon la revendication 1, dans laquelle ledit catalyseur consistant en imidazole 1-substitué est le 1-méthylimidazole.

9. Composition de résine époxy durcissable selon la revendication 4, dans laquelle ledit anhydride est présent en une quantité formant de 40 à 70 phr du DGEBA.

10. Composition de résine époxy durcissable selon la revendication 9, dans laquelle ledit anhydride est présent en une quantité formant de 50 à 65 phr du DGEBA.

11. Composition de résine époxy durcissable selon la revendication 4, dans laquelle ladite charge est de la silice.

12. Composition de résine époxy durcissable selon la revendication 11, dans laquelle ladite charge est présente en une quantité formant de 200 à 600 phr dudit poly(époxyde).

13. Composition de résine époxy durcissable selon la revendication 12, dans laquelle ladite charge est présente en une quantité formant de 250 à 500 phr dudit poly(époxyde).

14. Composition de résine époxy durcissable selon la revendication 13, dans laquelle ladite charge est présente en une quantité formant de 300 à 400 phr dudit poly(époxyde).

15. Procédé de fabrication d'articles thermodurcis, comprenant les étapes consistant à:
a) préchauffer une composition de résine époxy durcissable comprenant un poly(époxyde), un durcisseur consistant en un anhydride, un catalyseur consistant en un imidazole 1-substitué, une charge et au moins un diol choisi dans le groupe comprenant le bisphénol A et le poly(éthylène glycol) ou un mélange de ceux-ci, et facultativement des additifs ou d'autres ingrédients;
b) transférer une telle composition dans un moule préchauffé;
c) durcir ladite composition à une température et pendant un temps suffisants pour obtenir un article façonné ayant une structure tridimensionnelle infusible et une Tg (des Tg) satisfaisante(s) qui satisfait (satisfont) la relation 0,90.Tgu < Tg ≤ Tgu, où Tgu est la Tg finale développable par la composition de résine époxy durcie après une étape de post-durcissement de 10 heures à une température de 140° C.

16. Procédé de fabrication d'articles thermodurcis selon la revendication 15, dans lequel ledit poly(époxyde) de ladite composition de résine époxy durcissable est le diglycidyl éther de bisphénol A (DGEBA).

17. Procédé de fabrication d'articles thermodurcis selon la revendication 15, dans lequel ledit durcisseur consistant en un anhydride est choisi dans le groupe constitué par l'anhydride méthyltétrahydrophtalique; l'anhydride méthyl-4-endométhylène tétrahydrophtalique; l'anhydride hexahydrophtalique; l'anhydride tétrahydrophtalique.

18. Procédé de fabrication d'articles thermodurcis selon la revendication 17, dans lequel ledit durcisseur consistant en un anhydride est présent en une quantité formant de 40 à 125 phr du DGEBA.

19. Procédé de fabrication d'articles thermodurcis selon la revendication 18, dans lequel ledit durcisseur consistant en un anhydride est présent en une quantité formant de 50 à 90 phr du DGEBA.

20. Procédé de fabrication d'articles thermodurcis selon la revendication 15, dans lequel ledit diol est présent en une quantité formant de 5 à 50 phr dudit poly(époxyde).

21. Procédé de fabrication d'articles thermodurcis selon la revendication 20, dans lequel ledit diol est de préférence présent en une quantité formant de 10 à 40 phr dudit poly(époxyde).

22. Procédé de fabrication d'articles thermodurcis selon la revendication 15, dans lequel ladite charge est de la silice.

23. Procédé de fabrication d'articles thermodurcis selon la revendication 22, dans lequel ladite charge est présente en une quantité formant de 200 à 600 phr dudit poly(époxyde).

24. Procédé de fabrication d'articles thermodurcis selon la revendication 23, dans lequel ladite charge est présente en une quantité formant de 250 à 500 phr dudit poly(époxyde).

25. Procédé de fabrication d'articles thermodurcis selon la revendication 24, dans lequel ladite charge est présente en une quantité formant de 300 à 400 phr dudit poly(époxyde).

26. Procédé de fabrication d'articles thermodurcis selon la revendication 15, dans lequel ladite Tg (lesdites Tg) satisfaisante(s) satisfait (satisfont) la relation 0,94 Tgu≤Tg≤Tgu.

27. Article thermodurci façonné pouvant être obtenu par le procédé selon l'une quelconque des revendications 15 à 26.

28. Utilisation des articles thermodurcis façonnés selon la revendication 27, pour la fabrication de composants ou parties d'un équipement électrique.
